# EUROPÄISCHE PATENTANMELDUNG

(11) **EP 3 142 113 A1**
(43) Veröffentlichungstag der Anmeldung: **15.03.2017**
(21) Anmeldenummer: 16188137.0
(22) Anmeldetag: 09.09.2016
(51) Int. Cl.: G11B 3/60, G11B 3/61

(54) **VORRICHTUNG ZUM KONDITIONIEREN EINER SCHALLPLATTE BEIM ABSPIELEN**

(30) Priorität: 10.09.2015 CH 13092015
(71) Anmelder: Rohrer, Christian, 3086 Zimmerwald (CH)
(72) Erfinder: Rohrer, Christian, 3086 Zimmerwald (CH)
(74) Vertreter: Rüfenacht, Philipp Michael

(57) **Zusammenfassung**

Eine Vorrichtung zum Konditionieren einer Schallplatte (70) beim Abspielen umfasst eine flächige Unterlage (10) mit einer Abstützfläche zur grossflächigen Abstützung der Schallplatte (70) und ein Auflageelement (30) zur Ausübung einer Auflagekraft auf einen zentralen Bereich der Schallplatte (70). Die flächige Unterlage weist mindestens eine geschlossene Fluidkammer (16.2, 16.5) auf, wobei die mindestens eine Fluidkammer mindestens 60 % der Abstützfläche einnimmt. Das Fluid kann sich in der geschlossenen Fluidkammer bzw. den geschlossenen Fluidkammern (16.2, 16.5) in Abhängigkeit der auf die Kammer bzw. Kammern ausgeübten Kräfte verteilen. Es wird im Allgemeinen eine Konfiguration einnehmen, in welcher eine gleichmässige Flächenpressung resultiert. Es hat sich gezeigt, dass die entsprechende Lagerung der Schallplatte (70), die aufgrund der ihrerseits auf die Schallplatte (70) wirkenden Kräfte zu einer Konditionierung der Schallplatte führt (70), also zu einer entsprechenden (Mikro-)Formgebung derselben, zu einer verbesserten Klangqualität beiträgt.

## Beschreibung

### Technisches Gebiet

Die Erfindung betrifft eine Vorrichtung zum Konditionieren einer Schallplatte beim Abspielen, umfassend eine flächige Unterlage mit einer Abstützfläche zur grossflächigen Abstützung der Schallplatte und ein Auflageelement zum Auflegen auf einen zentralen Bereich der Schallplatte zur Ausübung einer Gewichtskraft auf dieselbe. Die Erfindung betrifft weiter ein Verfahren zum Konditionieren einer Schallplatte beim Abspielen.

### Stand der Technik

Schallplatten, flächige Tonträger mit spiralig angeordneten, profilierten Rillen zur analogen Tonaufzeichnung, sind seit längerer Zeit bekannt. Für die Wiedergabe werden Sie auf einen Drehteller eines Schallplatten-Abspielgeräts aufgelegt, der Drehteller wird mit einer vorgegebenen Winkelgeschwindigkeit in Umdrehung versetzt, und die Rillen werden durch einen Tonabnehmer mit einer Abtastnadel abgetastet. Das resultierende Audiosignal wird über einen Audioverstärker verstärkt und über einen Lautsprecher oder einen Kopfhörer wiedergegeben.

Übliche Drehteller weisen einen Durchmesser auf, welcher im Wesentlichen dem Durchmesser der (grössten) abzuspielenden Schallplatten entspricht und oft ca. 30 cm beträgt, was dem Durchmesser einer Langspielplatte entspricht. Die Drehteller weisen eine plane Oberfläche auf. Es ist bekannt, Drehteller mit einer verhältnismässig grossen Masse auszuführen, um die Laufruhe zu verbessern. Es ist ebenfalls bekannt, zwischen Drehteller und Schallplatte eine Unterlage anzuordnen, z. B. aus Kautschuk, Filz oder Kork, wobei diese Unterlagen verschiedene Zwecke erfüllen können, z. B. die Verhinderung von Schlupf zwischen Schallplatte und Plattenteller, die Dämpfung von Vibrationen des Plattentellers, die Verhinderung von statischer Aufladung der Schallplatte usw. Die bekannten Unterlagen weisen in der Regel eine konstante Dicke auf, ihre Ausdehnung entspricht im Wesentlichen der Ausdehnung des Drehtellers.

Es ist ebenfalls bekannt, zur Verbesserung der Ankopplung der Schallplatte an den Drehteller ein Auflageelement mit einer gewissen Masse auf den zentralen Bereich der Schallplatte aufzulegen. Das Auflageelement übt eine seiner Masse entsprechende Gewichtskraft auf die Schallplatte aus.

Es hat sich gezeigt, dass auch mit diesen Massnahmen noch nicht die bestmögliche Wiedergabequalität erreicht wird.

Die CH 631 285 (D. Bois, J. Olsfors, Tecnacron S. A.) schlägt vor, zur Vermeidung von Wiedergabefehlern aufgrund von Verwerfungen der abzuspielenden Schallplatte letztere vorzuspannen. Dazu wird eine Unterlage mit einer konischen Auflagefläche eingesetzt, die in einem zentralen Bereich ihre grösste Tiefe aufweist. Die Schallplatte wird ferner in ihrem zentralen Bereich durch ein mit einem Gewinde versehenen Dorn zusammenwirkendes Spannelement nach unten verspannt, so dass die Schallplatte zwangsweise die konische Form der Unterlage annehmen muss. Die konische Auflagefläche kann durch einen entsprechend geformten Drehteller gebildet sein oder durch eine auf den Drehteller aufzulegende separate Unterlage, wobei letztere auch nur ringförmige Erhebungen aufweisen kann, die eine Höhe der eingespannten Schallplatte bei bestimmten Radien vorgibt. Durch diese Massnahmen soll verhindert werden, dass die Abtastnadel kurzzeitig Kontakt mit der Profilierung der Rille verliert, was zu Beeinträchtigungen der Wiedergabequalität führt.

Diese Massnahmen sind geeignet, um auch gewisse deformierte Schallplatten in einen abspielbaren Zustand zu versetzen bzw. um Klangbeeinträchtigungen durch geringfügigere Deformationen zu reduzieren. Auch damit lässt sich aber noch keine maximale Klangqualität erreichen.

### Darstellung der Erfindung

Aufgabe der Erfindung ist es, eine dem eingangs genannten technischen Gebiet zugehörende Vorrichtung zum Konditionieren einer Schallplatte beim Abspielen zu schaffen, welche eine verbesserte Klangqualität ermöglicht.

Die Lösung der Aufgabe ist durch die Merkmale des Anspruchs 1 definiert. Gemäss der Erfindung weist die flächige Unterlage mindestens eine geschlossene Fluidkammer auf, wobei die mindestens eine Fluidkammer mindestens 60 % der Abstützfläche einnimmt.

Generell wirken auf die flächige Unterlage und damit die Fluidkammer eine Normalkraft der unter der Kammer liegenden Fläche (z. B. des Drehtellers) und eine Gewichts bzw. Auflagekraft der Schallplatte und des Auflageelements. Das Fluid kann sich in der geschlossenen Fluidkammer in Abhängigkeit der auf die Kammer ausgeübten Kräfte verteilen. Es wird im Allgemeinen eine Konfiguration einnehmen, in welcher eine gleichmässige Flächenpressung resultiert.

Es hat sich gezeigt, dass die entsprechende Lagerung der Schallplatte, die aufgrund der ihrerseits auf die Schallplatte wirkenden Kräfte zu einer Konditionierung der Schallplatte führt, also zu einer entsprechenden (Mikro-)Formgebung derselben, zu einer verbesserten Klangqualität beiträgt.

Die Fluidkammer kann die flächige Unterlage von der Oberseite, die die Abstützfläche für die Schallplatte bildet, bis zu ihrer Unterseite durchdringen, oder sie ist auf der Ober- und/oder der Unterseite mit weiteren Schichten überdeckt. Die mindestens 60 % der Abstützfläche beziehen sich auf den Flächenanteil des Auflageelements, welcher mindestens eine Fluidkammerschicht aufweist. Damit ist gemeint, dass die Gesamtheit der vorhandenen Fluidkammer mindestens 60 % der Abstützfläche einnimmt. Ist nur eine Kammer vorhanden, entspricht deren Anteil bezogen auf die Abstützfläche mindestens 60 %. Sind mehrere Kammern vorhanden, so entspricht die Summe der Anteile mindestens 60%.

Die flächige Unterlage weist insbesondere Hauptflächen auf, deren Ausdehnung im Wesentlichen der Ausdehnung der abzustützenden Schallplatte entspricht (bzw. der grössten abzustützenden Schallplatten). Die Schallplatte wird also auf ihrer gesamten Hauptfläche (oder einem wesentlichen Teil davon, z. B. mindestens 60%, bevorzugt mindestens 90 %) abgestützt. Die Dicke der flächigen Unterlage ist deutlich geringer als die maximale Ausdehnung der Hauptfläche. So weist die Hauptfläche der flächigen Unterlage insbesondere eine Kreisform auf, wobei der Durchmesser bevorzugt 270 - 320 mm beträgt, so dass die Unterlage zur Abstützung von Langspielplatten geeignet ist. Die Dicke der flächigen Unterlage beträgt demgegenüber vorzugsweise 0.5 - 5 mm.

Bei der flächigen Unterlage kann es sich um ein gesondertes Element handeln, welches auf den Drehteller oder weitere, auf dem Drehteller angeordnete, Elemente auflegbar ist. Es kann sich aber grundsätzlich auch um ein integriertes Element des Drehtellers handeln.

Eine im Rahmen der erfindungsgemässen Vorrichtung verwendbare flächige Auflage zur grossflächigen Abstützung einer Schallplatte umfasst also mindestens eine geschlossene Fluidkammer, wobei die mindestens eine Fluidkammer mindestens 60 % einer Abstützfläche für die Schallplatte einnimmt.

Bevorzugt erstreckt sich die mindestens eine Fluidkammer im Wesentlichen über die gesamte Abstützfläche der Schallplatte, d. h. über mindestens 90 %, bevorzugt mindestens 95%.

Mit Vorteil weist das Auflageelement eine ringartige Kraftübertragungsfläche zur Übertragung der Auflagekraft auf die Schallplatte auf. Es ergibt sich dadurch eine definierte Krafteinleitung auf den zentralen Bereich der Schallplatte.

Im Rahmen der erfindungsgemässen Vorrichtung handelt es sich um eine "ringartige" Fläche, wenn diese von der Fläche eines (echten) Kreisrings, also eines Kreisrings mit nicht verschwindendem zentralen Loch, abgedeckt wird und im Abdeckungsbereich des Kreisrings einen wesentlichen Teil desselben umfasst, so dass im Bereich dieses Kreisrings die von der ringartigen Fläche übertragene Kraft im Wesentlichen gleichmässig auf den entsprechenden, kreisringförmigen Radiusbereich der Schallplatte übertragen wird. Um eine "ringartigen" Fläche handelt es sich also insbesondere auch dann, wenn mehrere kreisringsektorförmige Elemente (mit jeweils identischen Innen- und Aussenradien) gleichmässig entlang einer Umfangslinie angeordnet sind, vorausgesetzt die Abstände und Winkelausdehnungen sind derart, dass unter Berücksichtigung der Materialeigenschaften der Schallplatte eine gleichmässige Krafteinleitung erfolgen kann.

Grundsätzlich kann das Auflageelement mehrere ringartige Kraftübertragungsflächen aufweisen.

Mit Vorteil beträgt ein Aussendurchmesser der ringartigen Kraftübertragungsfläche 6.0-10.0 cm. Sind mehrere derartige Kraftübertragungsflächen vorhanden, bezieht sich die Angabe auf die äusserste. Es ist allerdings bevorzugt, dass ein Innendurchmesser der ringartigen Kraftübertragungsfläche (bzw. der innersten Kraftübertragungsfläche) mindestens 5.0 cm beträgt, besonders bevorzugt beträgt eine Differenz zwischen Aussendurchmesser und Innendurchmesser maximal 2.0 cm.

Die Kraftübertragung zwischen Auflageelement und Schallplatte erfolgt somit (hauptsächlich) in einem Bereich, welcher vom Rotationszentrum der Schallplatte einen gewissen Abstand aufweist.

Bevorzugt weist die flächige Unterlage in einem zentralen Bereich eine ringartige Stützstruktur auf, wobei ein Durchmesser der ringartigen Stützstruktur kleiner ist als ein Durchmesser der ringartigen Kraftübertragungsfläche (bzw. als der oben erwähnte Innendurchmesser).

Die Schallplatte wird somit aufgrund einer in einem radial inneren Bereich in einer ersten Richtung vom Drehteller weg wirkenden Normalkraft der ringartigen Stützstruktur und aufgrund der in einem radial äusseren Bereich in einer zweiten Richtung, die der ersten Richtung entgegengesetzt ist, wirkenden Auflagekraft vorgespannt. Die auf die Schallplatte wirkenden Kräfte werden aufgrund der mindestens einen Fluidkammer gleichmässig abgestützt.

Mit einer bevorzugten Ausführungsform der erfindungsgemässen Vorrichtung lässt sich somit ein Verfahren zum Konditionieren einer Schallplatte beim Abspielen durchführen, welches folgende Schritte aufweist:
a) Auflegen einer flächigen Unterlage zur grossflächigen Abstützung der Schallplatte auf einen Drehteller eines Schallplatten-Abspielgeräts, wobei die flächige Unterlage mindestens eine geschlossene Fluidkammer aufweist, wobei die mindestens eine Fluidkammer mindestens 60 % einer Abstützfläche für die Schallplatte einnimmt und wobei die flächige Unterlage in einem zentralen Bereich eine ringartige Stützstruktur aufweist,
b) auflegen der Schallplatte auf die flächige Unterlage,
c) auflegen eines Auflageelements auf einen zentralen Bereich der Schallplatte zur Ausübung einer Auflagekraft auf dieselbe, wobei das Auflageelement eine ringartige Kraftübertragungsfläche zur Übertragung der Auflagekraft auf die Schallplatte aufweist, wobei ein Durchmesser der ringartigen Kraftübertragungsfläche grösser ist als ein Durchmesser der ringartigen Stützstruktur,
   so dass die Schallplatte aufgrund einer in einem radial inneren Bereich in einer ersten Richtung vom Drehteller weg wirkenden Normalkraft der ringartigen Stützstruktur und aufgrund der in einem radial äusseren Bereich in einer zweiten Richtung, die der ersten Richtung entgegengesetzt ist, wirkenden Auflagekraft vorgespannt wird.

Mit Vorteil ist die mindestens eine Fluidkammer im Wesentlichen vollständig mit einer Flüssigkeit befüllt. Dies bedeutet, dass (nicht in der Flüssigkeit gelöstes) Gas in der Fluidkammer nur einen minimen Volumenanteil, insbesondere maximal 5% bei einem Normdruck von 101'325 Pa und einer Temperatur von 20 °C, einnimmt. Die Fluidkammer zeigt somit - wie die darin aufgenommene Flüssigkeit - ein inkompressibles Verhalten. Entsprechend verhält sich das Auflageelement dauerhaft auf eine vorhersagbare Weise. Bei der Flüssigkeit kann es sich grundsätzlich um eine Lösung oder eine Emulsion handeln.

Als Flüssigkeit geeignet sind insbesondere Silikonöle. Sie sind langzeitstabil, toxisch unbedenklich und weisen eine niedrige Oberflächenspannung auf. Grundsätzlich sind Öle in einem weiten Viskositätsbereich von 0.6 bis 300'000 mPa·s geeignet.

In alternativen Ausführungsformen ist die mindestens eine Fluidkammer mit einem Gas oder einem Gas-/Flüssigkeitsgemisch gefüllt.

Mit Vorteil beträgt ein Aufnahmevolumen der mindestens einen Fluidkammer 20 - 200 ml. Beim Vorhandensein mehrere Fluidkammern ist damit das Gesamt-Aufnahmevolumen gemeint. Als besonders geeignet haben sich Volumina von 50 - 120 ml erwiesen.

Es hat sich gezeigt, dass eine flächige Unterlage mit derartigem Aufnahmevolumen die gewünschte Kraftverteilung ermöglicht, gleichzeitig aber eine stabile Führung der Schallplatte auf handelsüblichen Drehtellern mit handelsüblichem Zentrierdorn ermöglicht. In bestimmten Ausführungsformen, insbesondere dann, wenn die flächige Unterlage in den Drehteller integriert ist, sind auch andere, insbesondere grössere, Aufnahmevolumina möglich.

Mit Vorteil umfasst die flächige Unterlage zwei miteinander umlaufend verschweisste, im Wesentlichen parallele Folien. Die Folien weisen insbesondere je die Form eines Kreisrings auf, wobei der Innendurchmesser im Wesentlichen dem Durchmesser des Zentrierdorns des Drehtellers entspricht. Zwei umlaufende, fluiddichte Schweissungen verlaufen am Aussen- und am Innendurchmesser. Die mindestens eine Fluidkammer liegt im Zwischenraum zwischen den beiden Folien. Es ergibt sich eine einfach herstellbare, dauerhafte Anordnung.

Im unbelasteten Zustand verlaufen die beiden Folien im Wesentlichen parallel zueinander, das in der mindestens einen Fluidkammer befindliche Fluid verteilt sich gleichmässig auf die Fläche der mindestens einen Kammer. Bei der Verwendung zur Konditionierung einer Schallplatte bilden die Aussenflächen der beiden Folien einerseits die Abstützfläche und andererseits die Kontaktfläche mit dem Drehteller. Die Abstützfläche wird sich aufgrund der erwähnten Krafteinwirkungen verformen, um die konditionierte Schallplatte grossflächig abzustützen.

Andere Ausführungen der flächigen Unterlage sind möglich. So müssen die zwei Folien nicht direkt miteinander verschweisst sein, sondern sind beispielsweise über ringförmige Zwischenelemente (Wandelemente) miteinander verbunden. Auch ein Aufbau mit einer grösseren Anzahl an Bestandteilen ist möglich.

Bei einer bevorzugten Ausführungsform weist die flächige Unterlage eine Mehrzahl von gegeneinander abgeschlossenen Fluidkammern auf, wobei Trennwände zwischen benachbarten Fluidkammern radial verlaufen. Die Fluidkammern haben somit bei einer kreisringförmigen flächigen Auflage je die Form eines Kreisringsektors. Es sind insbesondere 3-30 Fluidkammern vorhanden, welche bevorzugt jeweils dasselbe Volumen aufweisen und dieselbe Fluidmenge aufnehmen.

Die Trennwände lassen sich bei einer aus zwei miteinander verschweissten Folien aufgebauten flächigen Unterlage insbesondere durch zusätzliche radiale Schweissnähte auf einfache Weise ausbilden.

Alternativ weist die flächige Unterlage nur eine einzige Fluidkammer auf, die sich über den gesamten mit der Fluidkammer versehenen Bereich der Abstützfläche erstreckt. Grundsätzlich kann die Fluidkammer durch nicht abschliessende Wände stabilisiert werden. Es werden so mehrere miteinander kommunizierende Bereiche geschaffen, zwischen denen der Flüssigkeitsaustausch mit reduziertem Durchsatz möglich ist.

Mit Vorteil ist das Auflageelement auf den zentralen Bereich der Schallplatte auflegbar, und eine Masse des Auflageelements beträgt mindestens 0.3 kg, insbesondere 0.8-3.0 kg. Das Auflageelement wirkt somit ausschliesslich mit seiner Gewichtskraft auf den zentralen Bereich der Schallplatte ein. Im Rahmen der erfindungsgemässen Vorrichtung lassen sich grundsätzlich Auflageelemente unterschiedlicher Masse einsetzen, die optimale Masse hängt dabei insbesondere vom Material und der Materialstärke der zu konditionierenden Schallplatte und von der Geometrie der Kraftübertragungsfläche zwischen Auflageelement und Schallplatte ab. Im Rahmen einer erfindungsgemässen Vorrichtung können mehrere Auflageelemente unterschiedlicher Masse bzw. mehrere miteinander kombinierbare Auflageelemente derselben oder unterschiedlicher Massen vorgesehen sein, so dass der Anwender je nach Schallplatte (und ggf. weiteren Faktoren) die bestgeeignete Masse auswählen bzw. zusammenstellen kann.

Alternativ kann die Auflagekraft, insbesondere eine entsprechende Kraft von ca. 7.85 - 29.5 N, durch ein andersartiges Auflageelement ausgeübt werden. So kann anstelle einer Masse ein Element verwendet werden, welches gegenüber der Schallplatte vorspannbar ist, z. B. indem es mit einer entsprechenden Vorspannkraft am Zentrierdorn angebracht wird. Die gewünschte Vorspannkraft lässt sich beispielsweise durch Federmittel vorgeben, diese können auch einstellbar ausgebildet sein.

Mit Vorteil umfasst die erfindungsgemässe Vorrichtung einen Adapterring zur Aufnahme einer Schallplatte mit einem Durchmesser, der geringer ist als ein Durchmesser der flächigen Unterlage, insbesondere zur Aufnahme von "Single"-Schallplatte mit einem Durchmesser von 17.5 cm. Der Adapterring nimmt die Schallplatte passend auf und führt dazu, dass sich im Wesentlichen dieselbe Geometrie ergibt wie bei einer Platte des grösseren Durchmessers, für deren Konditionierung die erfindungsgemässe Vorrichtung konzipiert ist. Die auf die kleinere Schallplatte einwirkenden Kräfte werden somit aufgrund des Adapterrings auf die gesamte Abstützfläche der flächigen Auflage verteilt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1A: Eine Draufsicht auf eine flächige Unterlage einer erfindungsgemässen Vorrichtung zum Konditionieren einer Schallplatte;
- Fig. 1B: einen Querschnitt durch eine vertikale Ebene entlang der Linie A-A in Fig. 1A;
- Fig. 2A: eine Draufsicht auf ein Auflageelement der erfindungsgemässen Vorrichtung;
- Fig. 2B: einen Querschnitt durch eine vertikale Ebene entlang der Linie B-B in Fig. 2A;
- Fig. 3A: eine Draufsicht auf eine auf die flächige Unterlage aufgelegte Schallplatte mit aufgelegtem Auflageelement;
- Fig. 3B: einen Querschnitt durch eine vertikale Ebene entlang der Linie C-C in Fig. 3A;
- Fig. 3C: eine Detailansicht des markierten Bereichs in Fig. 3B;
- Fig. 4A: eine Draufsicht auf einen Adapterring für Schallplatten kleineren Durchmessers; und
- Fig. 4B: einen Querschnitt durch eine vertikale Ebene entlang der Linie D-D in Fig. 4A.

Grundsätzlich sind in den Figuren gleiche Teile mit gleichen Bezugszeichen versehen.

### Wege zur Ausführung der Erfindung

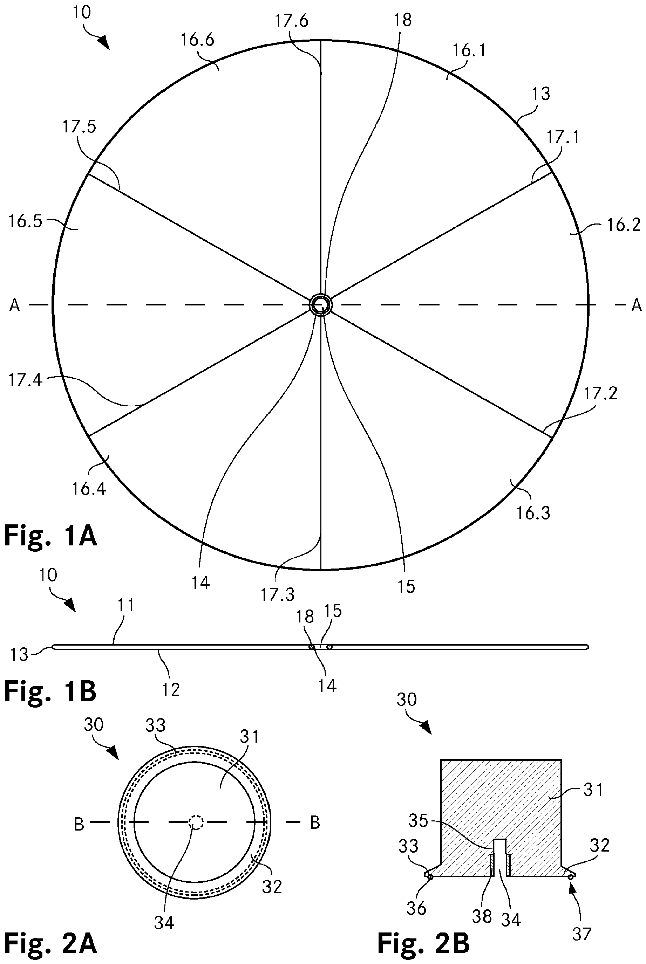

Die Figur 1A zeigt eine Draufsicht auf eine flächige Unterlage einer erfindungsgemässen Vorrichtung zum Konditionieren einer Schallplatte, die Figur 1B einen Querschnitt durch eine vertikale Ebene entlang der Linie A-A in Fig. 1A. Die flächige Unterlage 10 umfasst eine obere kreisförmige Folie 11 und eine untere kreisförmige Folie 12, welche jeweils mittig mit einem Loch 15 eines Durchmessers von 7 mm versehen sind, aus Kunststoff gefertigt sind und je eine Dicke von ca. 0.3 mm aufweisen. Die beiden Folien 11, 12 sind an ihrem äusseren Umfang durch eine äussere Schweissnaht 13 und das Loch 15 umgebend durch eine innere Schweissnaht 14 miteinander fluiddicht verbunden. Der zwischen den Folien 11, 12 gebildete Innenraum ist durch sechs radiale Schweissnähte 17.1, ..., 17.6 in sechs kreisringsektorförmige Kammern 16.1, ..., 16.6 aufgeteilt. Die radialen Schweissnähte 17.1...6 verlaufen von der inneren Schweissnaht 14 bis zur äusseren Schweissnaht 13, so dass die dazwischenliegenden Kammern 16.1...6 geschlossen sind und nicht miteinander kommunizieren. Die Schweissnähte 17.1...6 und damit die Kammern 16.1...6 sind regelmässig in einem jeweiligen Abstand von 60° angeordnet, so dass alle Kammern 16.1...6 dasselbe Aufnahmevolumen aufweisen.

Die Kammern sind im Wesentlichen vollständig mit Silikonöl einer Viskosität von 1'000 mPa·s befüllt. Das Gesamtvolumen des Silikonöls (und damit das gesamte Aufnahmevolumen der sechs Kammern 16.1...6) beträgt 70 ml.

Angrenzend an das Loch 15 und dieses umschliessend ist ein Stützring 18 zwischen die beiden Folien 11, 12 eingeschweisst. Die Höhe des Stützrings 18 beträgt ca. 1.5 mm, sein Aussendurchmesser ca. 12 mm. Die Mittelachse des Stützrings 18 fällt mit der Mittelachse des Lochs 15 zusammen.

Die Figur 2A zeigt eine Draufsicht auf ein Auflageelement der erfindungsgemässen Vorrichtung, die Figur 2B einen Querschnitt durch eine vertikale Ebene entlang der Linie B-B in Fig. 2A.

Das Auflageelement 30 umfasst einen im Wesentlichen kreiszylindrischen Grundkörper 31, welcher am unteren Ende einen über einen konusförmigen Abschnitt mit dem Grundkörper 31 verbundenen Flansch 32 aufweist. Auf der Unterseite des Grundkörpers 31 ist mittig eine kreiszylindrische Aufnahme 34 ausgespart. Diese weist einen vorderen Bereich auf mit einem grösseren Durchmesser, in welchem eine Buchse 38 aus Kunststoff (z. B. Nylon) aufgenommen ist. Ihr Innendurchmesser beträgt ca. 7.2 mm, die Wandstärke ca. 1.5 mm. Der hintere Bereich weist einen kleineren Durchmesser auf, welcher mit einem metallischen 5 mm-Gewinde 35 versehen ist.

Im Bereich des Flansches 32 ist die Unterseite des Auflageelements 30 mit einer Ringnut 33 versehen. In dieser ist ein O-Ring 36 mit kreisförmigem Querschnitt aufgenommen. Die Ringnut 33 und der O-Ring 36 sind so dimensioniert, dass der O-Ring 36 ca. 1 mm über die ansonsten plane Unterseite des Auflageelements 30 vorsteht. Er bildet eine entsprechende kreisförmige Kraftübertragungsfläche 37 aus. Der Durchmesser des O-Rings 36 und entsprechend der Kraftübertragungsfläche 37 beträgt 8.3 cm. Das Auflageelement hat eine Gesamtmasse von 1.5 kg. Es ist in den Figuren der Einfachheit halber als im Wesentlichen einstückiges Element dargestellt, kann aber aus verschiedenen Materialien gebildet sein. Beispielsweise kann innerhalb des Grundkörpers ein Material höherer Dichte aufgenommen sein, oder der Grundkörper ist mit einem Überzug bzw. einer Beschichtung versehen.

Das Gewinde 35 wird für die Verpackung der erfindungsgemässen Vorrichtung verwendet. Es kann mit einer Schraube zusammenwirken, um zwischen dem Auflageelement 30 und dem Kopf der Schraube zwei flächige Platten mit randseitigen Abstandhaltern die flächige Unterlage einzuschliessen. Letztere ist dadurch gut vor schädlichen Beeinflussungen, Knicken usw. geschützt.

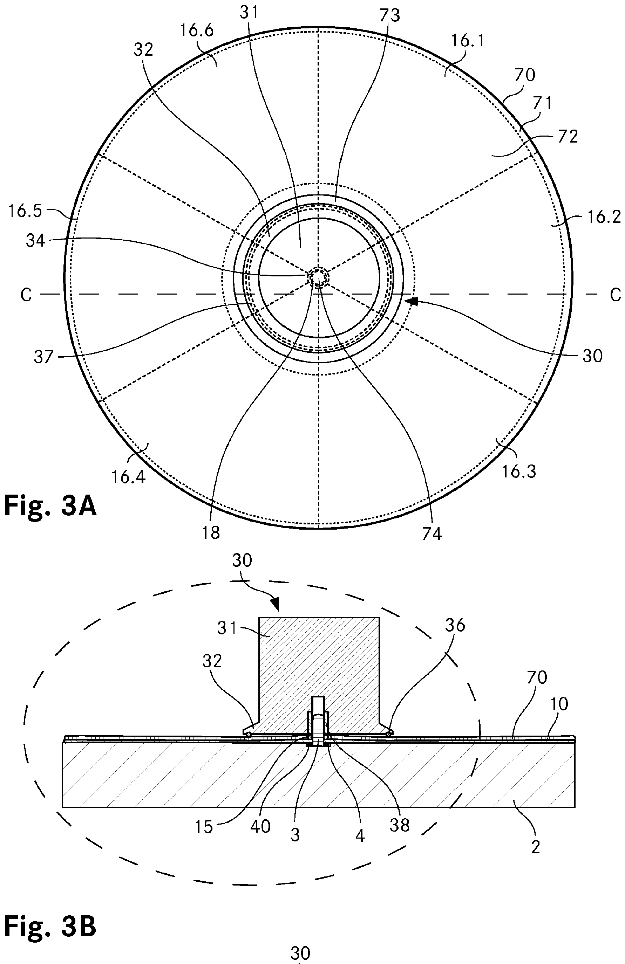

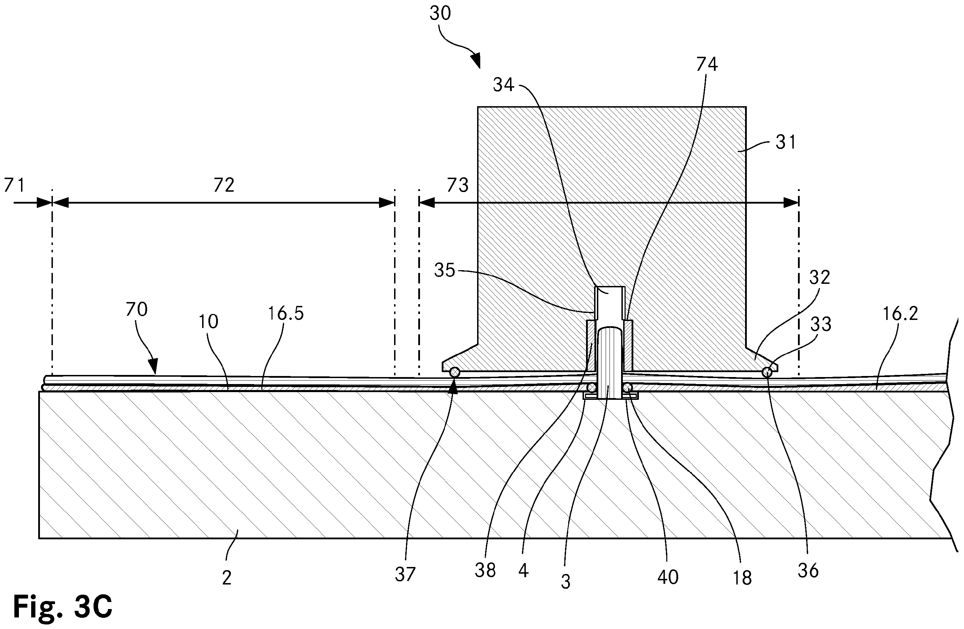

Die Figur 3A zeigt eine Draufsicht auf eine auf die flächige Unterlage aufgelegte Schallplatte mit aufgelegtem Auflageelement, die Figur 3B einen Querschnitt durch eine vertikale Ebene entlang der Linie C-C in Fig. 3A. Die Figur 3C zeigt eine Detailansicht des markierten Bereichs in Fig. 3B.

Bei der gezeigten Schallplatte 70 handelt es sich um eine Langspielplatte. Diese weist einen Durchmesser von 30.0 cm auf. Entlang des äusseren Randes ist ein erster ringförmiger Bereich 71 angeordnet, welcher u. a. die Aufsetzrille umfasst. Ab einem Radius von 14.6 cm beginnt der mit profilierten, Toninformationen enthaltenden Rillen versehene zweite ringförmige Bereich 72. Dieser erstreckt sich bis zu einem Radius von 5.7 cm. Innerhalb des zweiten ringförmigen Bereichs 72 ist die Etikette 73 angeordnet. Sie hat einen Durchmesser von 10.0 cm. Mittig ist ein Loch 74 mit einem Durchmesser von 7 mm ausgespart.

Die Schallplatte 70 ist über die flächige Unterlage 10 auf einem Drehteller 2 eines Abspielgeräts gelagert. Der Drehteller 2 hat eine zylindrische Form, seine obere Fläche ist weitgehend plan. Im Zentrum des Drehtellers 2 erstreckt sich ein zylindrischer Mitteldorn 3 mit einem Durchmesser von 7 mm senkrecht nach oben. Aufgrund des Lagers für den Drehteller 2 ist angrenzend an den Mitteldorn 3 eine kreisringförmige Vertiefung 4 in der oberen Fläche des Drehtellers 2 vorhanden. Diese Geometrie ist bei Drehtellern handelsüblicher Abspielgeräte verbreitet. Um eine - mit Ausnahme des Mitteldorns 3 - gänzlich plane Oberfläche zu schaffen, ist ein passender Einlagering 40 in die Vertiefung 4 eingelegt. In einer alternativen Ausführungsform ist der Einlagering in die flächige Auflage integriert, insbesondere eingeschweisst oder angeschweisst. Die innere Schweissnaht kann in diesem Fall einen Innenradius aufweisen, welcher grösser ist als der Aussendurchmesser des Einlagerings. Ferner kann der Einlagering bei gewissen Ausführungsformen mit dem Stützring kombiniert sein bzw. beide Funktionen von einem Element wahrgenommen werden.

Wie erwähnt, ist auf dem Drehteller 2 die flächige Unterlage 10 angeordnet. Sie wird über ihr mittiges Loch 15 auf dem Drehteller 2 zentriert. Wiederum auf der flächigen Unterlage 10 ist die Schallplatte 70 angeordnet. Das auf die Schallplatte 70 aufgesetzte Auflageelement 30 deckt die Etikette 73 zum grössten Teil ab, nur ihr äusserster Randbereich ist noch sichtbar. Das Auflageelement 30 wird mittels der Buchse 38 in der Aufnahme 34 passend am Mitteldorn 3 des Drehtellers 2 zentriert. Die Gewichtskraft des Auflageelements 30 wird über den O-Ring 36 auf die Schallplatte 70 übertragen, also über die ringförmige Kraftübertragungsfläche 37 mit einem Durchmesser von 8.3cm. Der Flansch 32 und der konusförmige Übergang zum Grundkörper 31 des Auflageelements 30 sind so dimensioniert, dass sich der Tonarm und das System beim Abspielen der Schallplatte 70 bis zum inneren Rand des zweiten, mit profilierten Rillen versehenen, ringförmigen Bereichs 72 ungehindert bewegen können.

Das Zusammenwirken der vom Auflageelement 30 verursachten Gewichtskraft mit der Gewichtskraft der Schallplatte 70 selbst und der von der oberen Fläche des Drehtellers 2 ausgeübten Gewichtskraft führt zu einer charakteristischen Verformung der Schallplatte 70, diese wird von der flächigen Unterlage 10 aufgenommen, indem die in den Kammern 16.1...6 aufgenommene Flüssigkeit entsprechend verdrängt wird. Die Verformung lässt sich in der Figur 3C erkennen, wobei zu beachten ist, dass die Darstellung in Bezug auf die Verformung nicht massstäblich ist. Von innen nach aussen ergibt sich im Querschnitt folgender Verlauf der Mittelebene der Schallplatte 70:
a) Angrenzend an das Loch 74 ist die Position der Schallplatte 70 in Bezug auf die obere Fläche des Drehtellers 2 durch den Stützring 18 der flächigen Unterlage 10 vorgegeben.
b) Bei einem Radius von 4.15 cm wirkt die Gewichtskraft des Auflageelements 30 auf die Oberseite der Schallplatte und damit auf die flächige Unterlage 10 ein. Es ergibt sich eine verstärkte Kompression der Unterlage 10, so dass die Schallplatte ausgehend von der gestützten Lochregion radial nach aussen geringfügig schräg nach unten verläuft, also einen geringfügig konischen Bereich bildet, der von oben gesehen konvex ist.
c) Wegen der aufgrund der einwirkenden Gewichtskraft insbesondere nach aussen verdrängten Flüssigkeit in den Kammern 16.1...6 ergibt sich eine Stützfläche der flächigen Auflage 10, welche ausserhalb der Kraftübertragungsfläche 37 radial nach aussen geringfügig schräg nach oben verläuft, also einen geringfügig konischen Bereich bildet, der von oben gesehen konkav ist.

Im Querschnitt ergibt sich also über den gesamten Durchmesser gesehen eine leichte W-Form. Der zweite ringförmige Bereich 72, in welchem die Tonrillen angeordnet sind, befindet sich zur Gänze im äusseren konischen Bereich.

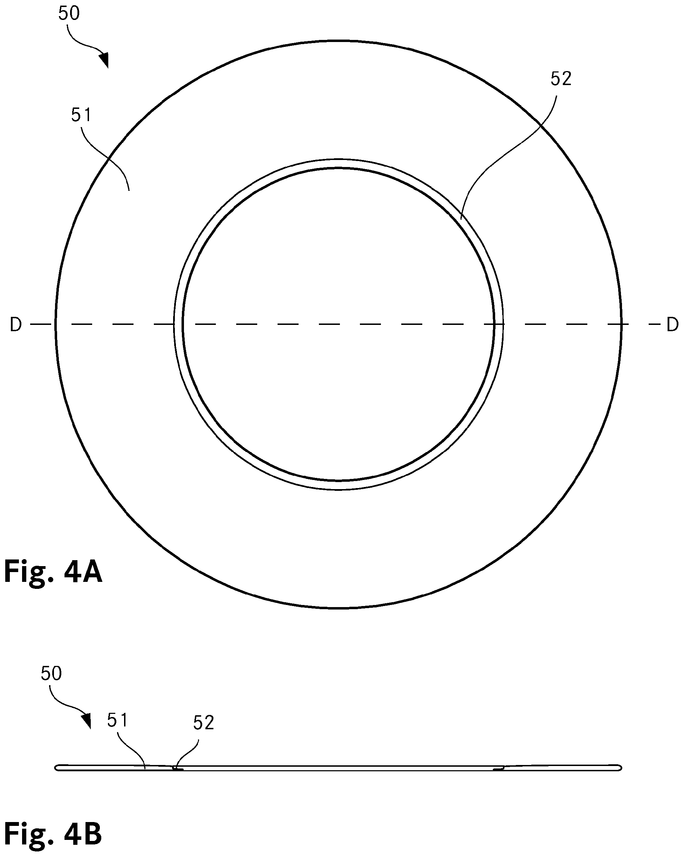

Die Figur 4A zeigt eine Draufsicht auf einen Adapterring für Schallplatten kleineren Durchmessers, die Figur 4B einen Querschnitt durch eine vertikale Ebene entlang der Linie D-D in Fig. 4A.

Der Adapterring 50 umfasst einen kreisringförmigen Hauptteil 51 mit einem Aussendurchmesser von 30 cm, also entsprechend einer Langspielplatte. Auch die Dicke entspricht derjenigen einer Langspielplatte. An der inneren Kante des kreisringförmigen Hauptteils 51 ist eine Aufnahmefläche 52 ausgebildet, in welchem die Dicke reduziert ist, so dass eine "Single"-Schallplatte mit einem Aussendurchmesser von 17.5 cm passend aufgenommen werden kann. Die Anordnung von Adapterring 50 und "Single"-Schallplatte lässt sich im Rahmen des erfindungsgemässen Systems anstelle einer Langspielplatte verwenden. Der Adapterring 50 sorgt dafür, dass die Kräfte auf dieselbe Weise wirken wie bei der Verwendung einer Langspielplatte. Dabei reicht es aufgrund der einwirkenden Kräfte aus, wenn die "Single"-Schallplatte über die Aufnahmefläche 52 vertikale Kräfte nach unten auf den Adapterring 50 übertragen kann.

Bevorzugt ist der Adapterring 50 aus einem Material gefertigt, welches ähnliche elastische Eigenschaften zeigt wie eine Langspielplatte.

Die Erfindung ist nicht auf das dargestellte Ausführungsbeispiel beschränkt. So kann die Geometrie der flächigen Unterlage anders gewählt werden, besonders was die Anordnung und Anzahl der Kammern, das Material und Volumen der eingeschlossenen Flüssigkeit oder die Dimensionen des Stützrings betrifft. Letzterer kann beispielsweise einen etwas grösseren Durchmesser aufweisen und somit radial beabstandet von der zentralen Öffnung der Unterlage angeordnet sein. Auch das Auflageelement kann hinsichtlich Dimensionen und Gewicht auf andere Weise ausgeführt sein. Anstelle einer Masse kann auch ein gegenüber dem Drehteller spannbares Element eingesetzt werden.

Die flächige Unterlage kann als integrales Element eines Drehtellers ausgeführt sein.

Anstelle eines Adapterrings können für "Single"-Schallplatten gesonderte flächige Unterlagen und Auflageelemente verwendet werden.

Zusammenfassend ist festzustellen, dass die Erfindung eine Vorrichtung zum Konditionieren einer Schallplatte beim Abspielen schafft, welche eine verbesserte Klangqualität ermöglicht.

## Patentansprüche

1. Vorrichtung zum Konditionieren einer Schallplatte beim Abspielen, umfassend
a) eine flächige Unterlage mit einer Abstützfläche zur grossflächigen Abstützung der Schallplatte, und
b) ein Auflageelement zur Ausübung einer Auflagekraft auf einen zentralen Bereich der Schallplatte,
**dadurch gekennzeichnet, dass**
die flächige Unterlage mindestens eine geschlossene Fluidkammer aufweist, wobei die mindestens eine Fluidkammer mindestens 60 % der Abstützfläche einnimmt.

2. Vorrichtung nach Anspruch 1, **dadurch gekennzeichnet, dass** das Auflageelement eine ringartige Kraftübertragungsfläche zur Übertragung der Auflagekraft auf die Schallplatte aufweist.

3. Vorrichtung nach Anspruch 2, **dadurch gekennzeichnet, dass** ein Aussendurchmesser der ringartigen Kraftübertragungsfläche 6.0-10.0 cm beträgt.

4. Vorrichtung nach Anspruch 2 oder 3, **dadurch gekennzeichnet, dass** die flächige Unterlage in einem zentralen Bereich eine ringartige Stützstruktur aufweist, wobei ein Durchmesser der ringartigen Stützstruktur kleiner ist als ein Durchmesser der ringartigen Kraftübertragungsfläche.

5. Vorrichtung nach einem der Ansprüche 1 bis 4, **dadurch gekennzeichnet, dass** die mindestens eine Fluidkammer im Wesentlichen vollständig mit einer Flüssigkeit befüllt ist.

6. Vorrichtung nach einem der Ansprüche 1 bis 5, **dadurch gekennzeichnet, dass** ein Aufnahmevolumen der mindestens einen Fluidkammer 20 - 200 ml beträgt.

7. Vorrichtung nach einem der Ansprüche 1 bis 6, **dadurch gekennzeichnet, dass** die flächige Unterlage zwei miteinander umlaufend verschweisste, im Wesentlichen parallele Folien umfasst.

8. Vorrichtung nach einem der Ansprüche 1 bis 7, **dadurch gekennzeichnet, dass** die flächige Unterlage eine Mehrzahl von gegeneinander abgeschlossenen Fluidkammern aufweist, wobei Trennwände zwischen benachbarten Fluidkammern radial verlaufen.

9. Vorrichtung nach einem der Ansprüche 1 bis 8, **dadurch gekennzeichnet, dass** das Auflageelement auf den zentralen Bereich der Schallplatte auflegbar ist und dass eine Masse des Auflageelements mindestens 0.3 kg, beträgt, insbesondere dass die Masse 0.8 - 3.0 kg beträgt.

10. Vorrichtung nach einem der Ansprüche 1 bis 9, umfassend einen Adapterring zur Aufnahme einer Schallplatte mit einem Durchmesser, der geringer ist als ein Durchmesser der flächigen Unterlage.

11. Flächige Auflage zur grossflächigen Abstützung einer Schallplatte für eine Vorrichtung nach einem der Ansprüche 1 bis 10, umfassend mindestens eine geschlossene Fluidkammer, wobei die mindestens eine Fluidkammer mindestens 60% einer Abstützfläche für die Schallplatte einnimmt.

12. Verfahren zum Konditionieren einer Schallplatte beim Abspielen, umfassend folgende Schritte:
a) Auflegen einer flächigen Unterlage zur grossflächigen Abstützung der Schallplatte auf einen Drehteller eines Schallplatten-Abspielgeräts, wobei die flächige Unterlage mindestens eine geschlossene Fluidkammer aufweist, wobei die mindestens eine Fluidkammer mindestens 60 % einer Abstützfläche für die Schallplatte einnimmt und wobei die flächige Unterlage in einem zentralen Bereich ein ringartige Stützstruktur aufweist,
b) auflegen der Schallplatte auf die flächige Unterlage,
c) auflegen eines Auflageelements auf einen zentralen Bereich der Schallplatte zur Ausübung einer Auflagekraft auf dieselbe, wobei das Auflageelement eine ringartige Kraftübertragungsfläche zur Übertragung der Auflagekraft auf die Schallplatte aufweist, wobei ein Durchmesser der ringartigen Kraftübertragungsfläche grösser ist als ein Durchmesser der ringartigen Stützstruktur,
so dass die Schallplatte aufgrund einer in einem radial inneren Bereich in einer ersten Richtung vom Drehteller weg wirkenden Normalkraft der ringartigen Stützstruktur und aufgrund der in einem radial äusseren Bereich in einer zweiten Richtung, die der ersten Richtung entgegengesetzt ist, wirkenden Auflagekraft vorgespannt wird.
